# DEMANDE DE BREVET EUROPEEN

(11) **EP 0 728 687 A1**
(43) Date de publication de la demande: **28.08.1996**
(21) Numéro de dépôt: 96400409.7
(22) Date de dépôt: 27.02.1996
(51) Int. Cl.: B65G 1/137

(54) **Procédé de préparation de commandes, chariot de collecte pour la mise en oeuvre de ce procédé et système de préparation de commandes**

(30) Priorité: 27.02.1995 FR 9502232
(71) Demandeur: L'OREAL, F-75008 Paris (FR)
(72) Inventeur: Herbinet, François, 95600 Eaubonne (FR)
(74) Mandataire: Leszczynski, André

(57) **Abrégé**

Procédé de préparation de commandes consistant à rassembler, dans un réceptacle placé sur un chariot autonome, des articles référencés dans une commande émanant d'un client et stockés dans un entrepôt.

A l'identification de chaque article stocké, on associe la masse unitaire de cet article et l'on pèse le réceptacle après chaque dépôt d'articles (4), on en déduit la masse totale des articles déposés, on compare cette masse totale avec une masse théorique égale au produit de la masse unitaire de l'article à prélever par le nombre correspondant d'articles, et l'on fournit un signal d'alerte dans le cas où la masse totale des articles déposés est différente, à une erreur de tolérance près, de la masse théorique calculée.

## Description

La présente invention concerne un procédé de préparation de commandes, un chariot de collecte pour la mise en oeuvre de ce procédé et un système de préparation de commandes utilisant au moins un tel chariot de collecte.

De nombreux domaines industriels, notamment les domaines de la pharmacie, de la cosmétique ou de la grande distribution, sont confrontés au problème de la préparation de commandes.

La préparation de commandes est une opération qui consiste à rassembler des produits ou articles de natures différentes dans un même emballage pour les faire parvenir à un client qui peut être un consommateur final ou un revendeur.

La principale difficulté de cette opération provient du fait que les commandes diffèrent d'un client à un autre.

Cette diversité des commandes rend délicate l'automatisation de leur préparation, d'autant plus que les produits à rassembler sont souvent très différents de par leur taille, leur forme et leur poids.

On a déjà proposé des systèmes de préparation de commandes, comme par exemple celui décrit dans le brevet US 3 908 800.

Ce système utilise des chariots individuels autonomes comportant chacun une pluralité de cases contenant des cartons à remplir.

Une commande est associée à chaque case du chariot, le système permettant de préparer simultanément plusieurs commandes à l'aide d'un même chariot.

Chaque chariot peut circuler librement à l'intérieur d'un entrepôt dans lequel sont stockés tous les articles disponibles, en étant déplacé par un opérateur qui est chargé de prélever les articles et de les déposer dans la case appropriée du chariot.

Un dispositif électronique est embarqué sur chaque chariot et indique à l'opérateur le trajet optimal à effectuer en fonction des commandes à préparer et, pour chaque emplacement de stockage d'articles, l'identification et le nombre des articles à prélever, ainsi que le carton de destination de ces articles.

Ce système connu présente l'avantage de permettre une préparation rapide et simultanée de plusieurs commandes, ces commandes étant gérées automatiquement par le dispositif électronique embarqué sur le chariot.

Cependant, dans ce système il n'est prévu aucun moyen de contrôle des opérations effectuées par l'opérateur.

En particulier, l'opérateur n'est pas tenu de respecter les instructions qui lui sont données par le dispositif électronique et peut commettre des erreurs, tant lors du prélèvement d'un article que lors de son dépôt dans une case du chariot.

Ce n'est qu'en fin de collecte, lorsque toutes les commandes sont préparées, que les contenus des cases sont vérifiés.

Une telle vérification est longue et fastidieuse.

En outre, s'il s'avère que des erreurs ont été commises dans la préparation de certaines commandes, la correction de ces erreurs peut occasionner un surplus de travail considérable.

Par ailleurs, du modèle d'utilité allemand 86 25530, on connaît un système de préparation de commandes utilisant des chariots qui sont assujettis par un rail à une trajectoire prédéterminée.

Sur chaque chariot, sont prévus des zones de réception de cartons et des dispositifs de pesée qui permettent, en fin de collecte, de vérifier que la masse totale du carton rempli correspond à la somme des masses, du carton vide et des articles figurant sur la commande correspondante.

Ce dispositif manque de souplesse du fait que chaque chariot est astreint à cheminer systématiquement dans tout l'entrepôt, indépendamment de la localisation des articles à prélever.

De plus, bien que la vérification des commandes soit facilitée par le pesage des cartons, ce contrôle n'est effectué qu'en fin de mission, comme avec le système décrit dans le brevet US 3 908 800 mentionné ci-dessus.

En outre, un tel contrôle ne garantit pas l'absence d'erreurs de prélèvement qui se compenseraient et passeraient ainsi inaperçues du fait que seule la masse finale du carton est contrôlée et non la masse individuelle des articles prélevés.

La présente invention vise à proposer un procédé de préparation de commandes qui résout notamment les problèmes mentionnés ci-dessus.

La présente invention a pour objet un procédé de préparation de commandes consistant à rassembler, dans un réceptacle placé sur un chariot autonome, des articles référencés dans une commande émanant d'un client et stockés dans un entrepôt, comprenant les étapes suivantes :
a) établissement, à partir de la commande, d'une liste d'articles à prélever indiquant l'identification et le nombre de chaque article,
b) classement des articles dans la liste en fonction de leur emplacement dans l'entrepôt et, en partant du premier article de la liste ainsi classée,
c) déplacement du chariot dans l'entrepôt pour l'amener à proximité du lieu de stockage de l'article à prélever,
d) prélèvement d'un nombre correspondant dudit article,
e) dépôt dans le réceptacle du ou des articles prélevés,
f) itération, à partir de l'étape c), pour l'article suivant dans l'ordre de la liste classée, tant que cette liste n'est pas épuisée,

ce procédé étant caractérisé par le fait qu'à l'identification de chaque article stocké, on associe la masse unitaire de cet article et qu'entre les étapes e) et f), on effectue une étape supplémentaire consistant à peser le réceptacle, à en déduire la masse totale des articles déposés lors de l'étape e), à comparer cette masse totale avec une masse théorique égale au produit de la masse unitaire de l'article à prélever par le nombre correspondant d'articles, et à fournir un signal d'alerte dans le cas où la masse totale des articles déposés est différente, à une erreur de tolérance près, de la masse théorique calculée.

On comprend que le procédé selon l'invention permet d'effectuer en temps réel le contrôle de la préparation de chaque commande qui est gérée sur le chariot.

En effet, le dépôt de chaque article ou de chaque lot de plusieurs mêmes articles dans un réceptacle du chariot est systématiquement suivi d'une vérification de la masse des articles ainsi déposés et d'une comparaison entre cette masse et la masse théorique des articles qui, selon la commande en cours de préparation, auraient dus être déposés dans le réceptacle.

Par conséquent, tout risque que plusieurs erreurs de prélèvement se compensent entre elles est écarté.

En outre, grâce à l'invention, le contrôle n'est pas reporté en fin de collecte, ce qui permet, en cas d'erreur, de la corriger immédiatement.

On peut ainsi minimiser le coût et les conséquences d'une correction des erreurs de collecte.

Dans un mode de mise en oeuvre de l'invention, on identifie chaque article lors de son prélèvement par lecture d'un identifiant, par exemple un code barre.

L'identifiant peut se trouver sur l'emballage de l'article ou sur une étiquette placée sur son lieu de stockage.

L'intérêt d'une telle identification est de réduire encore les risques de substitution entre deux produits qui auraient exactement la même masse, la pesée des produits permettant néanmoins de vérifier qu'un nombre correct d'articles ont été déposés dans le réceptacle.

En outre, ayant identifié et enregistré individuellement tous les articles qui composent une commande, on peut retracer l'historique d'un produit livré à un client et ainsi améliorer la qualité et le suivi de la distribution.

Dans un mode de mise en oeuvre préféré de l'invention, on prépare simultanément plusieurs commandes de la manière suivante.

On associe un réceptacle différent à chaque commande, tous les réceptacles étant disposés sur un même chariot autonome, et, lors de l'étape a) décrite ci-dessus, on établit, en fusionnant toutes les commandes, une liste d'articles indiquant l'identification, le nombre et le réceptacle de destination de chaque article, et, lors de l'étape e) ci-dessus, on dépose le ou les articles prélevés dans le réceptacle correspondant.

La présente invention a également pour objet un chariot de collecte pour la mise en oeuvre du procédé de préparation de commandes tel que décrit ci-dessus.

Ce chariot se caractérise par le fait qu'il est autonome et qu'il comporte :
- une surface munie de zones de réception de réceptacles, certaines au moins desdites zones constituant le plateau d'un organe de pesée,
- un dispositif électronique muni d'un organe d'affichage, apte à enregistrer une liste d'articles et à afficher séquentiellement l'identification, le nombre et le réceptacle de destination de chaque article de la liste,
- une mémoire associée à chaque organe de pesée pour enregistrer une valeur indiquée par cet organe de pesée à un instant donné,
- des moyens pour calculer l'écart entre une valeur indiquée par un organe de pesée et la valeur enregistrée dans la mémoire correspondante,
- un comparateur pour comparer cet écart avec une masse théorique prédéterminée, et
- un avertisseur pour émettre un signal d'alerte dans le cas où l'écart est différent, à une erreur de tolérance près, de la valeur théorique prédéterminée.

La présente invention a aussi pour objet un système de préparation de commandes qui est caractérisé par le fait qu'il comporte au moins un chariot tel que décrit ci-dessus ainsi qu'un dispositif de préparation de listes qui comporte des moyens pour :
- établir, en fusionnant plusieurs commandes, une liste d'articles indiquant l'identification, le nombre et le réceptacle de destination de chaque article,
- classer les articles dans cette liste en fonction de l'emplacement des articles dans l'entrepôt, et
- transmettre au chariot la liste classée ainsi préparée.

Dans un mode de réalisation préféré de l'invention, le système de préparation de commande comporte en outre des moyens de calcul des masses théoriques pour calculer, pour chaque article à prélever, le produit de la masse unitaire de l'article par le nombre correspondant de cet article et pour associer cette masse théorique à chaque article de la liste d'articles à prélever.

Dans le but de mieux faire comprendre l'invention, on va en décrire maintenant un mode de réalisation donné à titre d'exemple non limitatif en référence au dessin annexé dans lequel :
- la figure 1 est une vue en élévation d'un chariot autonome pour la mise en oeuvre de l'invention,
- la figure 2 est une vue de dessus de la figure 1,
- la figure 3 est un schéma synoptique d'un système pour la mise en oeuvre de l'invention, et
- la figure 4 est un schéma-bloc des différentes caractéristiques fonctionnelles d'un chariot selon l'invention.

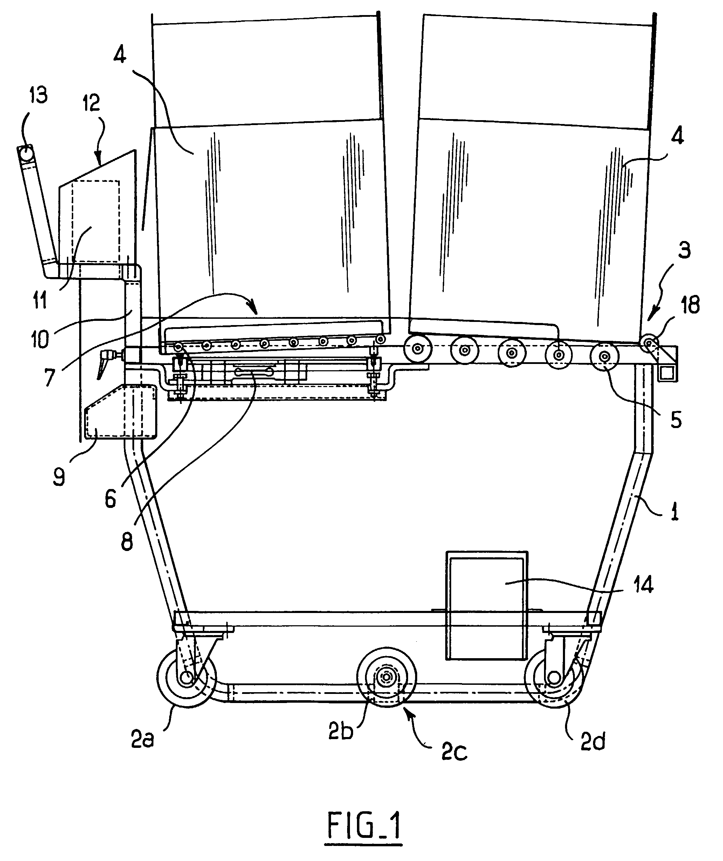

Le chariot représenté sur la figure 1 comporte un châssis 1 monté sur quatre roues 2a à 2d.

Ces dernières sont disposées en losange pour faciliter la manoeuvre du chariot, les roues centrales 2b, 2c étant fixes tandis que les roues avant 2d et arrière 2a sont pivotantes.

Le châssis 1 définit, à sa partie supérieure, une surface 3 munie de zones de réception de réceptacles 4 qui sont ici des cartons.

Cette surface 3 est pourvue de galets 5 et 6 dont la fonction est de faciliter le déplacement d'avant en arrière des cartons 4.

Dans l'exemple représenté, la surface 3 est apte à recevoir six cartons 4 disposés en deux rangées de trois cartons chacune.

Trois zones de réception, situées à l'arrière du chariot, constituent chacune le plateau 7 d'un organe de pesée 8 qui est relié à un dispositif électronique 9.

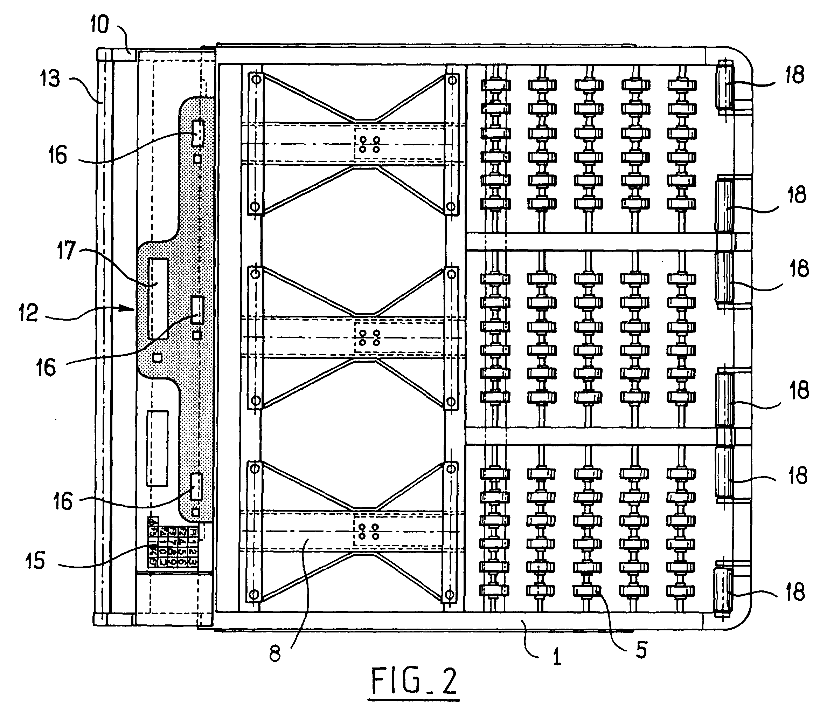

Sur la figure 2, les galets 6 de petit diamètre qui recouvrent les plateaux 7 n'ont pas été représentés dans un but de clarté.

A l'arrière du châssis 1, un bras 10 supporte un émetteur/récepteur radio 11 et un dispositif d'affichage 12, ainsi qu'une poignée 13 qui permet de manoeuvrer le chariot.

Une batterie électrique 14 est logée en partie inférieure du chariot pour alimenter les différents composants électroniques de ce dernier.

Le dispositif d'affichage 12, visible sur la vue de dessus de la figure 2, comporte un clavier 15 qui permet à l'opérateur de s'identifier en début de collecte.

Trois zones d'affichage 16 sont prévues en regard de l'emplacement de chaque carton 4 pour indiquer à l'opérateur, en cours de collecte, le carton de destination des articles à prélever.

Un afficheur central 17, de plus grande dimension que les précédents, permet d'indiquer des messages à destination de l'opérateur pour lui indiquer l'emplacement de prélèvement et le nombre d'articles à prélever, et pour lui donner des instructions complémentaires ou pour lui signaler des erreurs de collecte.

A l'aide du clavier 15, l'opérateur peut effectuer des saisies, notamment pour enregistrer des opérations de prélèvement non effectuées dues à l'épuisement des articles.

Avec un tel chariot, un opérateur peut préparer simultanément jusqu'à trois commandes, lesquelles sont respectivement associées aux trois cartons situés sur les trois plateaux 7 des organes de pesée. Le chariot est conçu pour pouvoir accueillir jusqu'à six cartons.

On remarque sur la figure 1, que ces plateaux 7 sont légèrement inclinés vers l'arrière de manière à immobiliser les cartons qui reposent sur des galets 6 et à éviter qu'un carton 4 placé sur l'un des plateaux ne prenne appui contre un carton voisin, ce qui pourrait fausser les pesées.

Au cours de la collecte, le dispositif d'affichage indique à l'opérateur les articles à prélever et leur emplacement dans l'entrepôt. L'opérateur déplace alors le chariot à proximité des lieux de stockage des articles concernés et effectue les prélèvements selon les indications du dispositif d'affichage.

Lorsque le remplissage d'un des cartons d'une commande présent sur le plateau 7 est terminé, l'opérateur saisit le carton 4 encore vide situé à l'avant du chariot et déplace le carton déjà rempli en le faisant rouler sur les galets 6 et 5 pour l'amener à l'avant du chariot, contre des butées 18.

Il dépose ensuite le carton vide sur le plateau 6 de l'organe de pesée et commence le remplissage de ce carton vide.

Lorsque les commandes sont prêtes, l'opérateur décharge les cartons en un lieu approprié et peut ainsi reprendre la préparation de nouvelles commandes.

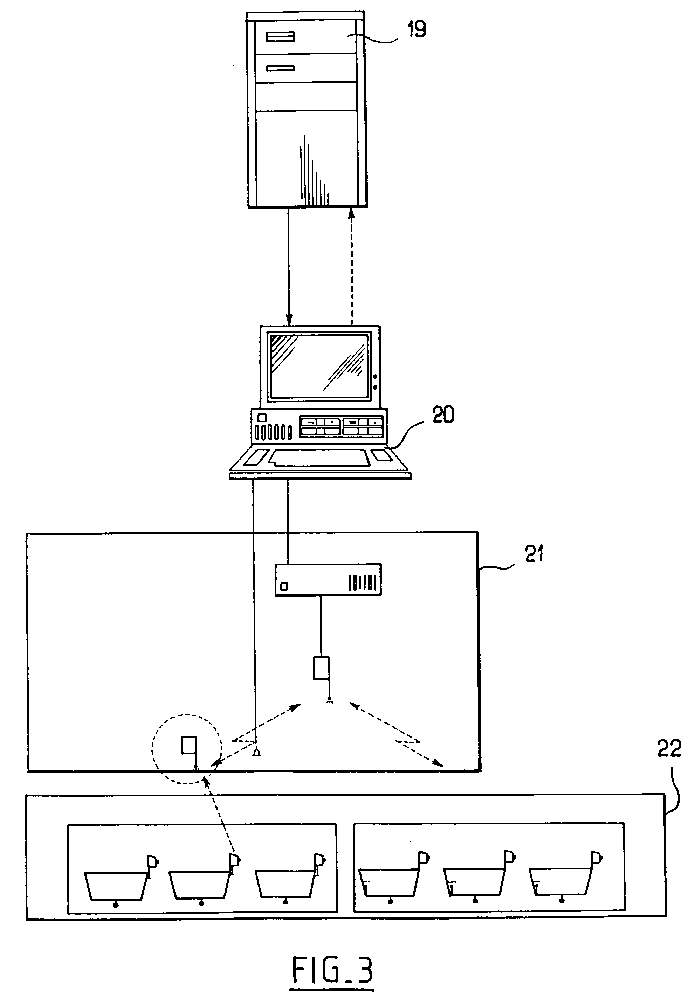

Sur le schéma synoptique de la figure 3, on a représenté l'ensemble des éléments du système de préparation selon l'invention.

Ce système se compose d'un ordinateur central 19 qui mémorise la liste des produits stockés, leur masse unitaire, leur emplacement dans l'entrepôt ainsi que les commandes à préparer.

Un poste de traitement 20, qui peut être constitué par un micro-ordinateur ou par un terminal passif de l'ordinateur central, reçoit de ce dernier les commandes à préparer.

Ce poste de traitement 20 prépare, pour chaque chariot, une liste d'articles à prélever en fusionnant jusqu'à trois commandes fournies par l'ordinateur central.

Cette liste est triée par articles en fonction de l'emplacement des articles dans l'entrepôt et comporte, pour chaque article, l'identification de l'article considéré, le nombre à prélever, le numéro du carton auquel il est destiné, et la masse théorique de cet article compte-tenu de sa masse unitaire et de son nombre à prélever.

Les listes sont marquées d'un numéro de chariot et sont transmises, par un émetteur/récepteur radio 21, aux différents chariots 22.

Chaque chariot 22 identifie la liste qui lui est destinée et l'enregistre.

En fin de collecte, chaque chariot 22 rend compte du bon déroulement des opérations et des éventuelles anomalies rencontrées au poste de traitement par l'intermédiaire de l'émetteur/récepteur radio 21.

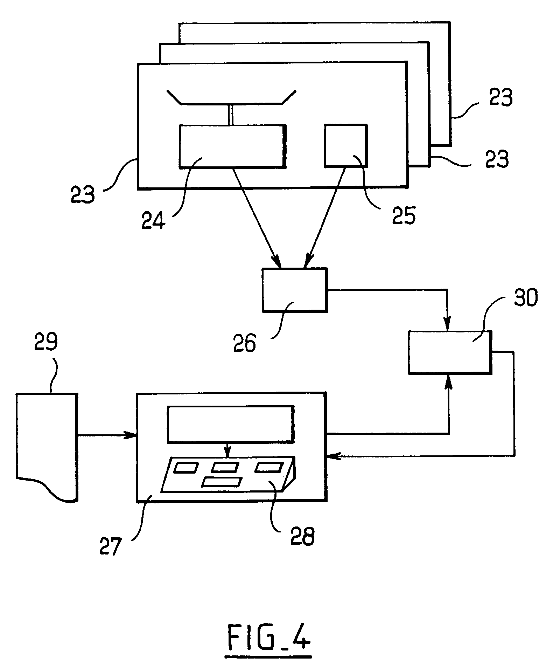

La figure 4 est un schéma-bloc illustrant les différentes caractéristiques fonctionnelles d'un chariot 22.

On a représenté en 23 un ensemble constitué par un organe de pesée 24 et sa mémoire associée 25 qui est apte à enregistrer une valeur indiquée par cet organe de pesée à un instant donné.

Des moyens 26 sont prévus pour calculer l'écart entre une valeur indiquée par un organe de pesée 24 et la valeur enregistrée dans la mémoire correspondante 25.

Un dispositif électronique 27 muni d'un organe d'affichage 28 est apte à enregistrer une liste 29 fournie par le poste de traitement 20 via un signal radio.

Un comparateur 30 reçoit la valeur d'un écart calculé par les moyens 26 et une masse théorique fournie par le dispositif électronique 27. Le résultat de la comparaison effectué par le comparateur 30 est retourné au dispositif électronique 27 pour affichage d'un signal d'alerte en cas de détection d'erreur.

Il est bien entendu que les modes de réalisation qui viennent d'être décrits ne présentent aucun caractère limitatif et qu'ils pourront recevoir toutes modifications désirables sans sortir pour cela du cadre de l'invention.

## Revendications

1. Procédé de préparation de commandes consistant à rassembler, dans un réceptacle placé sur un chariot autonome, des articles référencés dans une commande émanant d'un client et stockés dans un entrepôt, comprenant les étapes suivantes :
a) établissement, à partir de la commande, d'une liste d'articles à prélever indiquant l'identification et le nombre de chaque article,
b) classement des articles dans la liste en fonction de leur emplacement dans l'entrepôt et, en partant du premier article de la liste ainsi classée,
c) déplacement du chariot dans l'entrepôt pour l'amener à proximité du lieu de stockage de l'article à prélever,
d) prélèvement d'un nombre correspondant dudit article,
e) dépôt dans le réceptacle du ou des articles prélevés,
f) itération à partir de l'étape c) pour l'article suivant dans l'ordre de la liste classée tant que cette liste n'est pas épuisée,
ce procédé étant caractérisé par le fait qu'à l'identification de chaque article stocké, on associe la masse unitaire de cet article et qu'entre les étapes e) et f), on effectue une étape supplémentaire consistant à peser le réceptacle (4), à en déduire la masse totale des articles déposés lors de l'étape e), à comparer cette masse totale avec une masse théorique égale au produit de la masse unitaire de l'article à prélever par le nombre correspondant d'articles, et à fournir un signal d'alerte dans le cas où la masse totale des articles déposés est différente, à une erreur de tolérance près, de la masse théorique calculée.

2. Procédé de préparation simultanée de plusieurs commandes selon la revendication 1, caractérisé par le fait qu'on associe un réceptacle (4) différent à chaque commande, tous les réceptacles (4) étant disposés sur un même chariot autonome (22), que, lors de l'étape a), on établit, en fusionnant toutes les commandes, une liste d'articles indiquant l'identification, le nombre et le réceptacle de destination de chaque article et que, lors de l'étape e), on dépose le ou les articles prélevés dans le réceptacle (4) correspondant.

3. Chariot de collecte pour la mise en oeuvre du procédé de préparation de commandes selon l'une quelconque des revendications 1 et 2, caractérisé par le fait qu'il est autonome et qu'il comporte
- une surface (3) munie de zones de réception de réceptacles, certaines au moins desdites zones constituant le plateau (7) d'un organe de pesée (8),
- un dispositif électronique (27) muni d'un organe d'affichage (28) apte à enregistrer une liste (29) d'articles à collecter et à afficher séquentiellement l'identification, le nombre et le réceptacle de destination de chaque article de la liste,
- une mémoire (25) associée à chaque organe de pesée pour enregistrer une valeur indiquée par cet organe de pesée à un instant donné,
- des moyens (26) pour calculer l'écart entre une valeur indiquée par un organe de pesée et la valeur enregistrée dans la mémoire correspondante,
- un comparateur (30) pour comparer cet écart avec une masse théorique prédéterminée, et
- un avertisseur pour émettre un signal d'alerte dans le cas où l'écart est différent, à une erreur de tolérance près, de la valeur théorique prédéterminée.

4. Système de préparation de commandes, caractérisé par le fait qu'il comporte au moins un chariot selon la revendication 3 ainsi qu'un dispositif de préparation de liste comportant des moyens pour :
- établir, en fusionnant plusieurs commandes, une liste d'articles indiquant l'identification, le nombre et le réceptacle de destination de chaque article,
- classer les articles dans cette liste en fonction de l'emplacement des articles dans l'entrepôt,
- transmettre au chariot la liste classée ainsi préparée.

5. Système de préparation de commandes selon la revendication 4, caractérisé par le fait qu'il comporte en outre des moyens de calcul des masses théoriques pour calculer, pour chaque article à prélever, le produit de la masse unitaire de l'article par le nombre correspondant de cet article et pour associer cette masse théorique à chaque article de la liste d'articles à prélever.
